# EUROPEAN PATENT SPECIFICATION

(11) **EP 4 163 473 B1**
(45) Date of publication and mention of the grant of the patent: **10.12.2025**
(21) Application number: 21201434.4
(22) Date of filing: 07.10.2021
(51) Int. Cl.: E21C 41/00

(54) **CONTROL INFORMATION**
STEUERUNGSINFORMATION
INFORMATIONS DE COMMANDE

(43) Date of publication of application: 12.04.2023
(73) Proprietor: Sandvik Mining and Construction Oy, 33330 Tampere (FI)
(72) Inventor: KASKI, Miika, 33311 Tampere (FI); VALTEE, Mikko, 33311 Tampere (FI); MANNONEN, Petri, 33311 Tampere (FI)
(74) Representative: Sandvik

(56) References cited:
- CN-A- 112 352 364
- US-A1- 2017 337 808
- "Application of Computers and Operations Research in the Mineral Industry : Proceedings of the 32nd International Symposium on the Application of Computers and Operations Research in the Mineral Industry (APCOM) 2005), Tucson, USA, 30 March - 1 April 2005", 15 March 2005, TAYLOR & FRANCIS, ISBN: 978-1-4398-3340-7, article G BAIDEN ET AL: "Justification of "on-demand" ventilation systems by means of simulation techniques", pages: 457 - 462, XP055650054, DOI: 10.1201/9781439833407.ch61
- KESKI-KOUKKARI ANTTI ET AL: "Methodology to Analyze Effect of Electric Mining Machines on the Mine Grid", 2020 IEEE TRANSPORTATION ELECTRIFICATION CONFERENCE & EXPO (ITEC), IEEE, 23 June 2020 (2020-06-23), pages 852 - 857, XP033802245, [retrieved on 20200806], DOI: 10.1109/ITEC48692.2020.9161640

## Description

### TECHNICAL FIELD

The present application relates generally to providing control information. More specifically, the present application relates to providing control information for controlling provision of at least one flowing resource.

### BACKGROUND

Mobile mining machines operate in varying circumstances. A mining environment is a challenging operating environment in terms of providing necessary resources for operating in a mine.

Underground operation depends upon availability of different flowing resources such as water, electric power and air. Air is needed for, for example, providing ventilation in a mine in order to dilute and remove dust and noxious gases, and to regulate temperature in the mine. The source of noxious gases may be, for example, mobile mining machines that run on diesel engines, blasting with explosives, and the orebody itself.

In addition to air, underground operation requires electric power that may be consumed by the mobile mining machines, the ventilation and other equipment in the mine. Further, water is needed for, for example, cooling drilling equipment and managing dust.

G Baiden et al: "Justification of "on-demand" ventilation systems by means of simulation techniques" In: "Application of Computers and Operations Research in the Mineral Industry: Proceedings of the 32nd International Symposium on the Application of Computers and Operations Research in the Mineral Industry, (APCOM) 2005), Tucson, USA, 30 March - 1 April 2005", pages 457-462 disclose a process simulation model that shows supply requirements of both traditional ventilation methods where fans work at maximum capacity and all production areas are ventilated, and time dependent on-demand ventilation methods. A comparison of ventilation requirements given by the simulation model and their associated energy demands are presented along with the impact of activity schedules in optimizing the savings of the on-demand based ventilation systems.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided a resource control apparatus as defined in claim 1.

According to a second aspect of the invention, there is provided a method as defined in claim 14.

According to a third aspect of the invention, there is provided a computer program comprising instructions as defined in claim 15.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 illustrates an example mine;
Figure 4 shows an example method incorporating aspects of examples of the invention;
Figure 5 shows an example heatmap incorporating aspects of examples of the invention; and
Figure 6 shows another example method incorporating aspects of examples of the invention.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to providing control information. More particularly, example embodiments relate to providing control information for controlling provision of at least one flowing resource in a mining environment.

A mining environment is a challenging operating environment in terms of providing necessary resources for operating in a mine. Different types of mobile mining machines need different types of flowing resources in different parts of a mine. For example, a drilling rig may need water, electric power and air, while a bucket loader may need electric power. In addition, the need of resources may be different in different parts of a mine. A lack of resources in a particular place and/or at a particular time may cause delay or discontinuation of production.

An example embodiment relates to an apparatus configured to determine at least one target location of a mobile mining machine, receive data relating to operation of the mobile mining machine in a mining environment, determine at least one operation characteristic of the mobile mining machine based on the data, determine, based on the at least one target location and the at least one operation characteristic, an estimated demand of the mobile mining machine for at least one flowing resource in the at least one target location at a particular time instance, and provide, based on the estimated demand, control information for controlling provision of the at least one flowing resource.

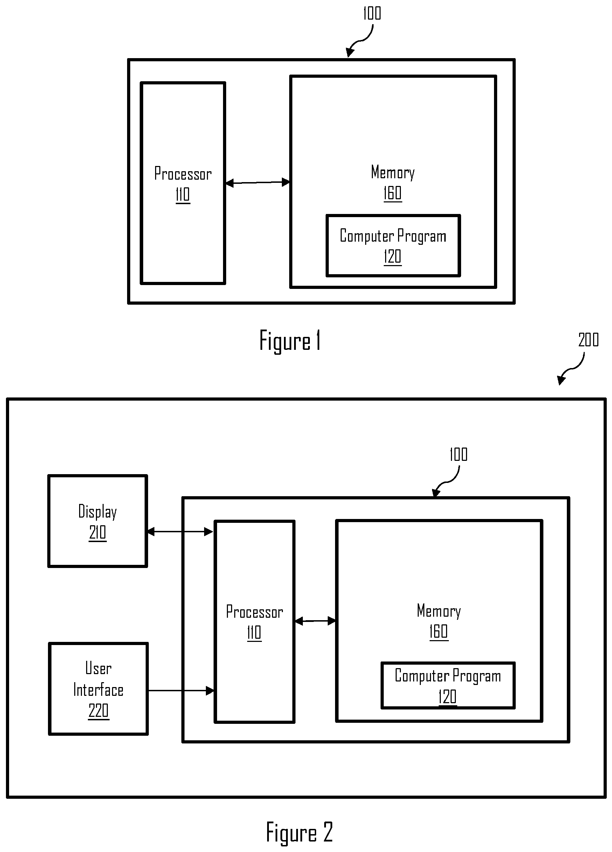

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a control apparatus, a computing device or the like. In the examples below it is assumed that the apparatus 200 is a computing device such as a resource control apparatus.

In the example embodiment of Figure 2, the apparatus 200 is illustrated as comprising the apparatus 100, a display 210 and a user interface 220 for interacting with the computing device 200. The display 210 may also be configured to act as a user interface. For example, the display may be a touch screen display. In an example embodiment, the display 210 and/or the user interface 220 may be external to the apparatus 200, but in communication with it.

Additionally or alternatively, the user interface may also comprise a manually operable control such as a button, a key, a touch pad, a joystick, a stylus, a pen, a roller, a rocker, a keypad, a keyboard or any suitable input mechanism for inputting and/or accessing information.

The apparatus 200 of the example of Fig. 2 may also be configured to establish radio communication with another device using, for example, a cellular network, a Bluetooth or WiFi connection, or the like.

According to an example embodiment, the apparatus 200 comprises a resource control apparatus configured to control provision of at least one resource for enabling operation of an individual mobile mining machine or a fleet of mobile mining machines in a mining environment.

According to an example embodiment, the apparatus 200 comprises a resource control apparatus for controlling provision of the at least one resource for a fleet of mobile mining machines.

A fleet of mobile mining machines may comprise a plurality of different types of mobile mining machines. Different types of mobile mining machines may have different requirements for the at least one flowing resource.

Different types of operations may be assigned to different types of mobile mining machines and, therefore, different types of mobile mining machines may have different demands for the at least one flowing resource. For example, a first type of a mobile mining machine such as a rock drilling machine may require a first flowing resource such as water while a second type of a mobile mining machine such as a transport machine does not require the first flowing resource, but a second flowing resource such as electric power for performing an assigned operation.

A fleet of mobile mining machines may comprise, for example, one or more rock drilling machines, one or more load haul dump (LHD) machines, ground support machines and one or more transport machines for operating in a mining environment in a controlled manner.

According to an example embodiment, the apparatus 200 is configured to communicate with one or more devices. For example, the apparatus 200 may be configured to communicate with a cloud server, a local server, an edge computing server, a mobile computing device, and/or different kinds of machinery such as mining machines, or the like.

Communicating with a device may comprise, for example, receiving and/or transmitting information using a wireless or wired connection. For example, the apparatus 200 may be configured to receive and/or transmit data relating to a mobile mining machine or the circumstances of the mobile mining machine. Data relating to a mobile mining machine may comprise, for example, measurement data, trends, recommendations, and/or instructions such as control signals. Data relating to the circumstances of the mobile mining machine may comprise contextual data relating to, for example, operating conditions of the mining machine, location of the mobile mining machine, or other contextual data.

A mobile mining machine may comprise a machine operable in a mining environment. For example, the mobile mining machine may comprise a rock drilling rig, a tunneling drilling machine, a bolting or reinforcing vehicle, a rock removal machine, a long hole drill rig, an explosive charging machine, a transport vehicle, a loading machine, hauling machine, a measuring vehicle, a passenger transport vehicle, or the like. According to an example embodiment, a mobile mining machine comprises a rock drilling machine, a load haul dump (LHD) machine, a ground support machine or a transport machine.

According to an example embodiment, the apparatus 200 is configured to receive information on a location of the mobile mining machine. The apparatus 200 may be configured to receive information on a location of the mobile machine from a separate device or the apparatus 200 may be configured to receive information on a location of the mobile mining machine in response to determining a location of the mining machine based on coordinate data.

A location of the mobile mining machine may comprise a past location, a current location or a future location of the mobile mining machine. A past location may comprise a location previously visited by the mobile mining machine, while a future location may comprise a location to be visited by the mobile mining machine. A future location may be determined based on a production plan or based on a programmed routine of the mobile mining machine. A future location may comprise, for example, a planned location such as a target location.

According to an example embodiment, the apparatus 200 is configured to receive information on at least one target location of a mobile mining machine.

The at least one target location may comprise one target location or a plurality of target locations of a mobile mining machine. The plurality of target locations may comprise, for example, a plurality of separate locations or an area formed by the plurality of target locations.

According to another example embodiment, the apparatus 200 is configured to receive information on at least one target location of a plurality of mobile mining machines.

The apparatus 200 may be configured to receive information on the at least one target location from a predefined plan such as a production plan, from an operator of the mining machine, or the apparatus 200 may be configured to determine the target location based on received coordinate information.

A target location may comprise a location in a mine environment such as a location in an underground mine. A location in an underground mine may comprise a location associated with coordinates of a mine coordinate system or coordinates of other coordinate systems. A target location may comprise an absolute location such as a location corresponding to geographical coordinate values or a relative location such as a location relative to a reference point, for example, a point in the mining environment such as an end of a tunnel. The at least one target location may comprise a single location or a plurality of locations.

A target location may comprise a location for performing an operation by the mobile mining machine. Different types of mobile machines may be configured to perform different types of operations. For example, an operation performed by a drilling rig may comprise a drilling operation and an operation performed by a loading machine may comprise a loading operation.

According to an example embodiment, the apparatus 200 is configured to determine at least one target location of a mobile mining machine. The apparatus 200 may be configured to determine the at least one target location in response to receiving information on the at least one target location or the apparatus 200 may be configured to determine the at least one target location based on a predefined plan such as a production plan, based an operator input, or the like.

Determining the at least one target location may comprise determining the at least on target location with respect to a current location of the mobile mining machine. For example, determining the at least one target location may comprise determining a distance or travel time from a current location of the mobile mining machine to the target location.

According to an example embodiment, the apparatus 200 is configured to receive data relating to operation of the mobile mining machine in a mining environment. According to another example embodiment, the apparatus 200 is configured to receive data relating to operation of a plurality of mining machines in a mining environment.

Data relating to operation of the mobile mining machine in a mining environment may comprise, for example, measurement data, data derived based on measurement data, computational data such as data provided by a computer algorithm, computer model, simulation, or the like.

According to an example embodiment, data relating to operation of the mobile mining machine in a mining environment is associated with a location of the mobile mining device in the mining environment. The apparatus 200 may be configured to associate data relating to operation of the mobile mining machine with a location of performing the operation or a device providing the data may be configured to associate data relating to operation of the mobile mining machine with location information.

Without limiting the scope of the claims, an advantage of associating data relating to operation of the mobile mining machine with a location of performing the operation by the mobile mining machine is that contextual factors affecting the operation of the mobile mining machine may be detected.

Data relating to operation of the mobile mining machine may comprise different types of data such as dynamic data and static data. Dynamic data may comprise data that is received continuously or at set intervals, while static data may comprise data that is updated when a criterion is fulfilled such as when a change in the context of the mobile mining machine is detected.

Dynamic data may comprise data relating to performance of the mobile mining machine such as information describing behavior of the mobile mining machine while performing an operation. Data relating to performance of the mobile mining machine may comprise for example, parameter values relating to operational efficiency of the mobile mining machine, consumption of resources by the mobile mining machine, or the like.

Static data may comprise data relating to the mining environment such as information on factors affecting the behavior of the mobile mining machine while performing the operation.

According to an example embodiment, the data relating to operation of the mobile mining machine comprises data relating to performance of the mobile mining machine and data relating to the mining environment.

The apparatus 200 may be configured to analyze the data relating to operation of the mobile mining machine in the mining environment.

According to an example embodiment, the apparatus 200 is configured to determine at least one operation characteristic of the mobile mining machine based on the data relating to operation of the mobile mining machine in the mining environment.

According to another example embodiment, the apparatus 200 is configured to determine the at least one operation characteristic of a plurality of mobile mining machines operating in the mining environment. For example, the apparatus 200 may be configured to determine a first operation characteristic of a first mobile mining machine and a second operation characteristic of a second mobile mining machine.

An operation characteristic may comprise a parameter value describing operation of the mobile mining machine in a particular operational context. For example, the apparatus 200 may be configured to determine the at least one operation characteristic of the mobile mining machine based on data relating to performance of the mobile mining device and/or based on data relating to the mining environment.

Determining the at least one operation characteristic of the mobile mining machine may comprise determining an operational context of the mobile mining machine. The apparatus 200 may be configured to determine the operational context of the mobile mining machine based on one or more settings of the apparatus, based on monitoring the environment of the apparatus, based on an operator profile, or the like.

An operational context of a mobile mining machine may comprise, for example, a type of operation performed by the mobile mining machine, a type of equipment used by the mobile mining machine, environment factors such as location of the mobile mining machine or rock type processed by the mobile mining machine, experience level of the operator of the mobile mining machine, characteristics of the mobile mining machine such as the age of the mobile mining machine or a period of time elapsed from the latest maintenance of the mobile mining machine, type of operation of the mobile mining machine such as automatic or manual operation of the mobile mining machine, or the like.

According to an example embodiment, the at least one operation characteristic comprises data relating to consumption of at least one flowing resource in a particular operational context.

A flowing resource may comprise a flowing resource consumed by the mobile mining machine. According to an example embodiment, the at least one flowing resource comprises at least one of the following: air, electric power or water. The at least one flowing resource may further comprise, for example, a flow of tools or consumables relating to operation of the mobile mining machine such as drill rods or drill bits.

Without limiting the scope of the claims, an advantage of determining at least one operation characteristic of a mobile mining device based on data relating to operation of the mobile mining machine is that an operation characteristic taking into account an operating context provides data that can be compared with data relating to operation of other mobile mining devices in similar or different contexts.

According to an example embodiment, the apparatus 200 is configured to determine, based on the at least one target location and the at least one operation characteristic, an estimated demand of the mobile mining machine for at least one flowing resource in the at least one target location at a particular time instance.

According to an example embodiment, the apparatus 200 is configured to determine an estimated demand of a plurality of mobile mining machines for at least one flowing resource in the at least one target location at a particular time instance.

Without limiting the scope of the claims, an advantage of determining an estimated demand of a plurality of mobile mining machines for at least one flowing resource is that a demand of the flowing resources may be estimated for, for example, a part of the mine or even the whole mine. In this way, the provision of the flowing resources may be optimized in different parts of the mine where different types of mobile mining machines having different kinds operation characteristics may be operating.

An estimated demand may comprise a demand of the mobile mining machine for the at least one flowing resource for performing at least one operation in the at least one target location at the particular time instance. An estimated demand may comprise an average consumption, a median consumption or the highest consumption.

A particular time instance may comprise an accurate time instance, an estimated time instance such as a period of time, or a time instance relating to a work cycle. According to an example embodiment, the particular time instance comprises a future time instance.

The apparatus 200 may be aware of a current location of the mobile mining machine and may be configured to determine, based on the at least one target location, the distance from the current location to the target location or travelling time from the current location to the target location. Further, the apparatus 200 may be configured to determine, based on the at least one operation characteristic, an estimated demand of the mobile mining machine for at least one flowing resource in a particular operating context.

Without limiting the scope of the claims, an advantage of determining an estimated demand of the mobile mining machine for at least one flowing resource based on the at least one target location and the at least one operation characteristic is that a need of the at least one flowing resource at a particular location at a particular time instance may be determined in advance. This enables continuous operation in a mining environment where providing flowing resources is generally complicated.

The apparatus 200 may be configured to determine an estimated demand of the mobile mining machine for at least one flowing resource in a plurality of locations at different time instances.

According to an example embodiment, the apparatus 200 is configured to estimate a demand of the mobile mining machine for the at least one flowing resource in the first target location at a first time instance and in a second target location at a second time instance.

The first target location and the second target location may comprise different locations. For example, the first target location and the second target location may comprise different locations in an underground mine.

Without limiting the scope of the claims, an advantage of estimating a demand of the mobile mining machine for the at least one flowing resource at different locations at different time instances is that a provision of flowing resources may be optimized for, for example, a larger part of an underground mine or in some cases even the entire underground mine.

According to an example embodiment, estimating a demand of the mobile mining machine for the at least one flowing resource comprises determining an availability of the at least one flowing resource in the at least one target location at the particular time instance.

Determining the availability of the at least one flowing resource in the at least one target location at a particular time instance may comprise, for example, determining a current availability of the at least one flowing resource at a particular location. As another example, determining the availability of the at least one flowing resource may comprise determining a delay in obtaining the at least one flowing resource in the at least one target location.

The estimated demand for the at least one flowing resource may be dynamically adjusted based on factors affecting the estimation.

According to an example embodiment, the apparatus 200 is configured to adjust the estimated demand in response to a change in the at least one operation characteristic.

Without limiting the scope of the claims, an advantage of adjusting the estimated demand in response to a change in the at least one operation characteristic is that the estimated demand may be adjusted when the operational context of the mobile mining machine changes, thereby enabling more efficient production and/or more sustainable consumption of flowing resources. For example, when a rock type handled by the mobile mining machine changes, the estimated demand may increase or decrease.

According to an example embodiment, the estimated demand comprises a total demand or a supplementary demand.

A total demand may comprise a total demand in a particular target location or a total demand in a plurality of target locations. Similarly, the supplementary demand may comprise a supplementary demand in a particular target location or a supplementary demand in a plurality of target locations.

According to an example embodiment, the apparatus 200 is configured to present the estimated demand on a display.

The estimated demand may be presented in different manners such as different kinds of diagrams or the estimated may be mapped to the mining environment. The apparatus 200 may be configured to map the estimated demand in a particular location to a map representing the mining environment.

According to an example embodiment, the apparatus 200 is configured to present the estimated demand as a heatmap. A heatmap may comprise a graphical representation of the estimated demand in the mining environment and it may be based on a system of color-coding to represent different values. The color-coding may be used for indicating where the estimated demand for flowing resources is high and where low.

The apparatus 200 may further be configured to present provision of the at least one flowing resource as a heatmap. For example, the apparatus 200 may be configured to present progress of ventilation in a mine or progress of providing water in the mine.

Without limiting the scope of the claims, an advantage of presenting the estimated demand as a heatmap is that an operator may quickly notice the parts of the mining environment where the estimated demand is high and react accordingly.

According to an example embodiment, the apparatus 200 is configured to provide, based on the estimated demand, control information for controlling provision of the at least one flowing resource.

Control information may comprise, for example, providing one or more parameters for controlling provision of the at least one flowing resource. Controlling provision of the at least one flowing resource may comprise controlling provision of the at least one flowing resource to a particular target location or a plurality of target locations. The control information may relate to activating, deactivating, increasing or decreasing provision of the at least one flowing resource.

Control information may further comprise one or more criterion for the flowing resource. For example, control information may comprise a criterion for the quality of water, duration of ventilation, water level in a water reservoir, or the like.

Providing control information for controlling provision of the at least one flowing resource may comprise determining a delay in the at least one flowing resource being available at the at least one target location.

According to an example embodiment, the control information comprises one or more timing parameters for controlling provision of the at least one flowing resource.

A timing parameter may comprise a parameter indicating a particular time instance, a period of time between a first time instance and a second time instance, a period of time to be elapsed before controlling provision of the at least one flowing resource, a duration of controlling provision of the at least one flowing resource, a period of time to be elapsed after a criterion is fulfilled, or the like. A criterion to be fulfilled may comprise, for example, that an operation is completed. For example, a criterion to be fulfilled may comprise that ventilation need to be on for two hours after an explosion.

Controlling provision of the at least one flowing resource may comprise, for example, controlling a water pump to pump more or less and/or controlling ventilation on/off or controlling the amount of ventilation.

In addition to providing control information for controlling provision of the at least one flowing resource, the apparatus 200 may be configured to provide control information for controlling consumption of the at least one flowing resource.

According to an example embodiment, the apparatus 200 is configured to provide control information for controlling consumption of the at least one flowing resource of the mining machine.

The apparatus 200 may be configured to provide control information for controlling provision of the at least one flowing resource based on different priorities of the flowing resources. The priorities of the flowing resources may depend on a type of the mining machine or capabilities of the mobile mining machine. For example, the apparatus 200 may be configured to prioritize water over electric power, if the mobile mining machine has a spare battery, or the like.

According to an example embodiment, the apparatus 200 is configured to control provision of the at least one flowing resource based on the control information.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for determining at least one target location of a mobile mining machine, means for receiving data relating to operation of the mobile mining machine in a mining environment, means for determining at least one operation characteristic of the mobile mining machine based on the data relating to operation of the mobile mining machine in the mining environment, means for determining, based on the at least one target location and the at least one operation characteristic, an estimated demand of the mobile mining machine for at least one flowing resource in the at least one target location at a particular time instance, and means for providing, based on the estimated demand, control information for controlling provision of the at least one flowing resource.

The apparatus 200 may further comprise means for estimating a demand of the mobile mining machine for the at least one flowing resource in the first target location at a first time instance and in a second target location at a second time instance, means for adjusting the estimated demand in response to a change in the at least one operation characteristic and/or means for providing control information for controlling consumption of the at least one flowing resource of the mining machine.

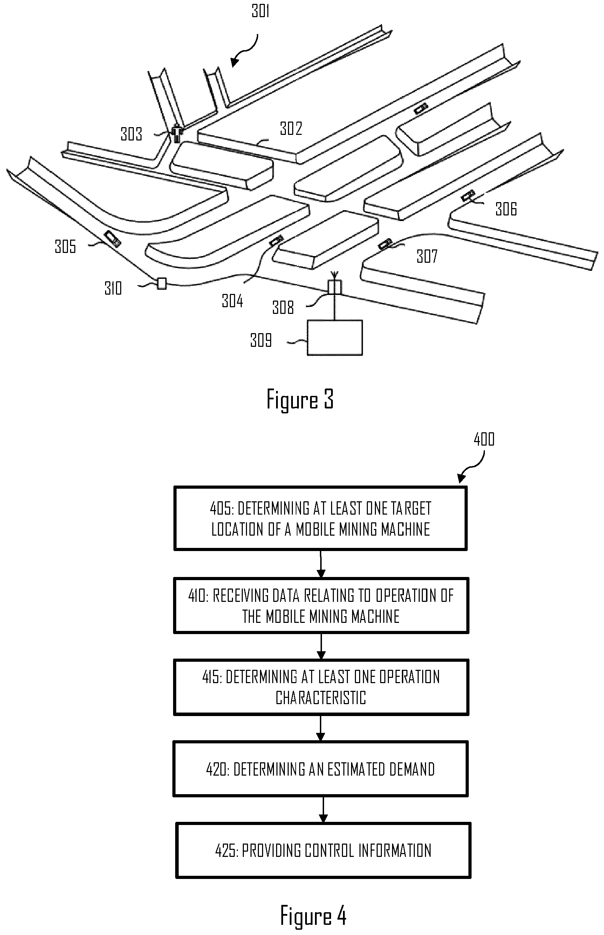

Figure 3 illustrates an example mine 301. In the example of Figure 3, the mine 301 comprises an underground mine comprising a network 302 of underground tunnels. A plurality of mobile objects such as persons or pedestrians 303 and/or mobile mining machines 304, 305, 306, 307 may be present and in the mine and move different areas or operation zones of the mine 301.

As mentioned above, a mobile mining machine may comprise mobile work machines suitable to be used in mine operations such as such as lorries, dumpers, vans, mobile rock drilling or cutting rigs, mobile reinforcement machines, and bucket loaders. The mobile mining machines may be autonomously operating mobile mining machines, which herein refers to automated or semi-automated mobile mining machines.

In the example of Figure 3, the mine 301 comprises a communications system, such as a wireless access system comprising a wireless local area network (WLAN), comprising a plurality of wireless access nodes 308. The access nodes 308 may communicate with wireless communications units comprised by the work machines or carried by the pedestrians and with further communications devices such as network devices configured to facilitate communications with an on-site and/or remote control system 309.

The mine 301 may further comprise various other types of mine operations devices 310 connectable to the control system 309 e.g. via the access node 308. Examples of such further mine operations devices 310 include various devices for power supply, ventilation, air condition analysis, safety, communications, and other automation devices. Mine operations devices may be autonomous, they may be controlled by a human operator or they may be remote-controlled. The mine operations devices may be part of or be connected to a mine operations analysis and control system such as a system for collision detection and avoidance, and the system may be operating automatically without human intervention or it may be monitored or controlled by a human operator. In this manner, an operator may be understood to be an operator of the mine operations analysis and control system. An operator may also be understood to be an operator of equipment, mobile mining machines, as well as any units connected to the control system or being part of the control system.

Figure 4 illustrates an example method 400 incorporating aspects of the previously disclosed embodiments. More specifically, the example method 400 illustrates providing control information. The method may comprise a computer-implemented method performed by the apparatus 200.

The method starts with determining 405 at least one target location of a mobile mining machine. Determining the at least one target location may be performed in response to receiving information on the at least one target location or based on a predefined plan such as a production plan, based an operator input, or the like.

Determining the at least one target location may comprise determining the at least on target location with respect to a current location of the mobile mining machine. For example, determining the at least one target location may comprise determining a distance or travel time from a current location of the mobile mining machine to the target location.

The method continues with receiving 410 data relating to operation of the mobile mining machine in a mining environment. Data relating to operation of the mobile mining machine in a mining environment may comprise, for example, measurement data, data derived based on measurement data, computational data such as data provided by a computer algorithm, computer model, simulation, or the like.

The data relating to operation of the mobile mining machine may comprise different types of data such as data relating to performance of the mobile mining machine and data relating to the mining environment and the data relating to operation of the mobile mining machine in a mining environment may be associated with a location of the mobile mining device in the mining environment such as a location of the mobile mining machine performing the operation.

The method further continues with determining 415 at least one operation characteristic of the mobile mining machine based on the data relating to operation of the mobile mining machine in the mining environment.

An operation characteristic may comprise a parameter value describing operation of the mobile mining machine in a particular operational context. For example, the apparatus 200 may be configured to determine the at least one operation characteristic of the mobile mining machine based on data relating to performance of the mobile mining device and/or based on data relating to the mining environment.

In the example of Figure 4, the at least one operation characteristic comprises data relating to consumption of at least one flowing resource in a particular operational context and the at least one flowing resource comprises air, electric power and/or water.

The method further continues with determining 420, based on the at least one target location and the at least one operation characteristic, an estimated demand of the mobile mining machine for at least one flowing resource in the at least one target location at a particular time instance.

An estimated demand may comprise a demand of the mobile mining machine for the at least one flowing resource for performing at least one operation in the at least one target location at the particular time instance. A particular time instance may comprise an accurate time instance or an estimated time instance such as a period of time.

Determining an estimated demand of the mobile mining machine for at least one flowing resource may comprise determining an estimated demand in a plurality of locations at different time instances. For example, determining an estimated demand of the mobile mining machine for at least one flowing resource in the at least one target location at a particular time instance may comprise determining an estimated demand for the at least one flowing resource in a first target location at a first time instance and in a second target location at a second time instance.

The method further continues with providing 425, based on the estimated demand, control information for controlling provision of the at least one flowing resource.

Providing control information may comprise, for example, providing one or more parameters for controlling provision of the at least one flowing resource. The control information may relate to activating, deactivating, increasing or decreasing provision of the at least one flowing resource. For example, the control information may comprise one or more timing parameters for controlling provision of the at least one flowing resource.

A timing parameter may comprise a parameter indicating a particular time instance, a period of time between a first time instance and a second time instance, a period of time to be elapsed before controlling provision of the at least one flowing resource, a period of time to be elapsed after a criterion is fulfilled, or the like.

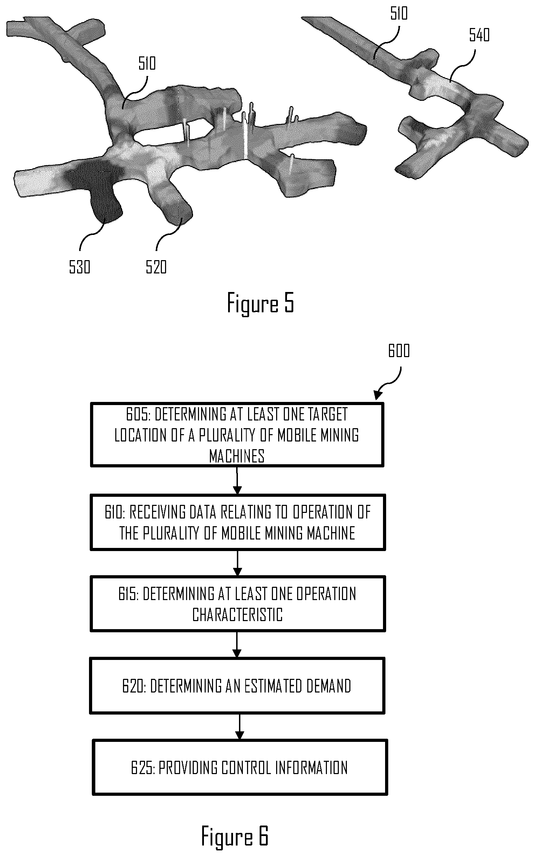

Figure 5 illustrates an example heatmap presenting an estimated demand of a flowing resource in an underground mine 510. A flowing resource may comprise a flowing resource consumed by a mobile mining machine such as air, electric power and/or water. The heatmap may be provided by the apparatus 200.

In the example of Figure 5, a high demand of a flowing resource is indicated using a color 530 that is darker than a color 520 indicating a medium demand or a color 540 indicating a low demand of the flowing resource.

The apparatus 200 may further be configured to present provision of the at least one flowing resource as a heatmap. For example, the apparatus 200 may be configured to present progress of ventilation in a mine or progress of providing water in the mine, for example, such that a large amount of a flowing resource is indicated using a color 530 that is darker than a color 520 indicating a medium amount or a color 540 indicating a small amount of the flowing resource.

Figure 6 illustrates an example method 600 incorporating aspects of the previously disclosed embodiments. More specifically, the example method 600 illustrates providing control information. The method may comprise a computer-implemented method performed by the apparatus 200.

The method starts with determining 605 at least one target location of a plurality of mobile mining machines. The at least one target location may comprise a single target location of the plurality of mobile mining machines or a plurality of different target locations of the plurality of mining machines. Some of the plurality of the mobile mining machines may have a common target location and some of the plurality of the mobile mining machines may have different target location.

The plurality of mobile mining machines may comprise a fleet of mobile mining machines. The fleet of mobile mining machines may comprise mobile mining machines of different types such as rock drilling machines, a load haul dump (LHD) machines, ground support machines and/or transport machines for operating in a mining environment in a controlled manner.

Determining the at least one target location may be performed in response to receiving information on the at least one target location or based on a predefined plan such as a production plan, based an operator input, or the like.

Determining the at least one target location may comprise determining the at least on target location with respect to a current location of the mobile mining machine. For example, determining the at least one target location may comprise determining a distance or travel time from a current location of the mobile mining machine to the target location.

The method continues with receiving 610 data relating to operation of the plurality of mobile mining machines in a mining environment. Data relating to operation of the plurality of mobile mining machine in a mining environment may comprise, for example, measurement data, data derived based on measurement data, computational data such as data provided by a computer algorithm, computer model, simulation, or the like.

The data relating to operation of a mobile mining machine may comprise different types of data such as data relating to performance of the mobile mining machine and data relating to the mining environment and the data relating to operation of the mobile mining machine in a mining environment may be associated with a location of the mobile mining device in the mining environment such as a location of the mobile mining machine performing the operation.

The method further continues with determining 615 at least one operation characteristic of the plurality of mobile mining machines based on the data relating to operation of the plurality of mobile mining machines in the mining environment. The apparatus 200 may be configured to determine an individual operation characteristic of a mobile mining machine or a type specific operation characteristic based on a type of the mobile mining machine.

An operation characteristic may comprise a parameter value describing operation of the mobile mining machine in a particular operational context. For example, the apparatus 200 may be configured to determine the at least one operation characteristic of the mobile mining machine based on data relating to performance of the mobile mining device and/or based on data relating to the mining environment.

In the example of Figure 6, the at least one operation characteristic comprises data relating to consumption of at least one flowing resource in a particular operational context and the at least one flowing resource comprises air, electric power and/or water.

The method further continues with determining 620, based on the at least one target location and the at least one operation characteristic, an estimated demand of the plurality of mobile mining machines for at least one flowing resource in the at least one target location at a particular time instance.

An estimated demand may comprise a demand of the plurality of mobile mining machines for the at least one flowing resource for performing at least one operation in the at least one target location at the particular time instance. For example, an estimated demand may comprise a demand of different types of mobile mining machines for water in the at least one target location. A particular time instance may comprise an accurate time instance or an estimated time instance such as a period of time.

Determining an estimated demand of the plurality of mobile mining machines for at least one flowing resource may comprise determining an estimated demand in a plurality of locations at different time instances. For example, determining an estimated demand of the plurality of mobile mining machines for at least one flowing resource in the at least one target location at a particular time instance may comprise determining an estimated demand for the at least one flowing resource in a first target location at a first time instance and in a second target location at a second time instance.

The method further continues with providing 625, based on the estimated demand, control information for controlling provision of the at least one flowing resource.

Providing control information may comprise, for example, providing one or more parameters for controlling provision of the at least one flowing resource. The control information may relate to activating, deactivating, increasing or decreasing provision of the at least one flowing resource. For example, the control information may comprise one or more timing parameters for controlling provision of the at least one flowing resource.

A timing parameter may comprise a parameter indicating a particular time instance, a period of time between a first time instance and a second time instance, a period of time to be elapsed before controlling provision of the at least one flowing resource, a period of time to be elapsed after a criterion is fulfilled, or the like.

Without limiting the scope of the claims, an advantage of providing, based on the estimated demand, control information for controlling provision of the at least one flowing resource is that the demand may be estimated in advance and necessary demand may be provided in a correct location at a correct time.

Without in any way limiting the scope, interpretation, or application of the claims appearing below, a technical effect of one or more of the example embodiments disclosed herein is that mining operations may be performed with less interruptions, thereby enabling more efficient operation.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

The scope of protection of the current invention is defined by the appended claims.

## Claims

1. A resource control apparatus (200) comprising at least one processor (110) and at least one memory (160) including computer program code (120), the at least one memory (160) and the computer program code (120) configured to with the at least one processor (110), cause the apparatus at least to:
determine at least one target location of a mobile mining machine (304, 305, 306, 307);
receive data relating to operation of the mobile mining machine (304, 305, 306, 307), the data comprising data relating to performance of the mobile mining machine in a mining environment;
determine, based on the data relating to operation of the mobile mining machine (304, 305, 306, 307) in the mining environment, at least one operation characteristic comprising a parameter value describing operation of the mobile mining machine (304, 305, 306, 307) in a particular operational context;
determine, based on the at least one target location and the at least one operation characteristic, an estimated demand of the mobile mining machine (304, 305, 306, 307) for at least one flowing resource in the at least one target location at a particular time instance; and
provide, based on the estimated demand, control information for controlling provision of the at least one flowing resource.

2. The apparatus according to claim 1, wherein the at least one flowing resource comprises at least one of the following: air, electric power or water.

3. The apparatus according to claim 1 or 2, wherein the control information comprises one or more timing parameters for controlling provision of the at least one flowing resource.

4. The apparatus according to any preceding claim, wherein the data relating to operation of the mobile mining machine further comprises data relating to the mining environment.

5. The apparatus according to any preceding claim, wherein the at least one operation characteristic comprises data relating to consumption of the at least one flowing resource in the particular operational context.

6. The apparatus according to any preceding claim, wherein the at least one memory (160) and the computer program code (120) are configured to with the at least one processor (110), cause the apparatus (100, 200) to estimate a demand of the mobile mining machine (304, 305, 306, 307) for the at least one flowing resource in the first target location at a first time instance and in a second target location at a second time instance.

7. The apparatus according to any preceding claim, wherein estimating a demand of the mobile mining machine (304, 305, 306, 307) for the at least one flowing resource comprises determining an availability of the at least one flowing resource in the at least one target location at the particular time instance.

8. The apparatus according to any preceding claim, wherein the at least one memory and the computer program code are configured to with the at least one processor, cause the apparatus to adjust the estimated demand in response to a change in the at least one operation characteristic.

9. The apparatus according to any preceding claim, wherein the estimated demand comprises a total demand or a supplementary demand.

10. The apparatus according to any preceding claim, wherein the at least one memory (160) and the computer program code (120) are configured to with the at least one processor (110), cause the apparatus (100, 200) to provide control information for controlling consumption of the at least one flowing resource of the mining machine (304, 305, 306, 307).

11. The apparatus according to any preceding claim, wherein the resource control apparatus comprises an apparatus for controlling provision of the at least one resource for a fleet of mobile mining machines (304, 305, 306, 307).

12. The apparatus according to any preceding claim, wherein the apparatus is configured to present the estimated demand as a heatmap.

13. The apparatus according to any preceding claim, wherein the mobile mining machine (304, 305, 306, 307) comprises a rock drilling machine, a load haul dump (LHD) machine, a ground support machine or a transport machine.

14. A method comprising:
determining (405) at least one target location of a mobile mining machine;
receiving (410) data relating to operation of the mobile mining machine, the data comprising data relating to performance of the mobile mining machine in a mining environment;
determining (415), based on the data relating to operation of the mobile mining machine in the mining environment, at least one operation characteristic comprising a parameter value describing operation of the mobile mining machine in a particular operational context;
determining (420), based on the at least one target location and the at least one operation characteristic, an estimated demand of the mobile mining machine for at least one flowing resource in the at least one target location at a particular time instance; and
providing (425), based on the estimated demand, control information for controlling provision of the at least one flowing resource.

15. A computer program comprising instructions which, when the program is executed on the processor (110) of the resource control apparatus (200) of claim 1, causes the resource control apparatus (200) to perform at least the following:
determining at least one target location of a mobile mining machine (304, 305, 306, 307);
receiving data relating to operation of the mobile mining machine (304, 305, 306, 307), the data comprising data relating to performance of the mobile mining machine in a mining environment;
determining, based on the data relating to operation of the mobile mining machine (304, 305, 306, 307) in the mining environment, at least one operation characteristic comprising a parameter value describing operation of the mobile mining machine (304, 305, 306, 307) in a particular operational context;
determining, based on the at least one target location and the at least one operation characteristic, an estimated demand of the mobile mining machine (304, 305, 306, 307) for at least one flowing resource in the at least one target location at a particular time instance; and
providing, based on the estimated demand, control information for controlling provision of the at least one flowing resource.

## Patentansprüche

1. Ressourcensteuerungseinrichtung (200), die mindestens einen Prozessor (110) und mindestens einen Speicher (160) umfasst, der einen Computerprogrammcode (120) beinhaltet, wobei der mindestens eine Speicher (160) und der Computerprogrammcode (120) konfiguriert sind, um mit dem mindestens einen Prozessor (110) die Einrichtung mindestens zu veranlassen:
mindestens einen Zielort einer mobilen Bergbaumaschine (304, 305, 306, 307) zu bestimmen;
Daten, die sich auf den Betrieb der mobilen Bergbaumaschine (304, 305, 306, 307) beziehen, zu empfangen, wobei die Daten solche Daten umfassen, die sich auf die Leistung der mobilen Bergbaumaschine in einer Bergbauumgebung beziehen;
basierend auf den Daten, die sich auf den Betrieb der mobilen Bergbaumaschine (304, 305, 306, 307) in der Bergbauumgebung beziehen, mindestens eine Betriebseigenschaft zu bestimmen, die einen Parameterwert umfasst, der den Betrieb der mobilen Bergbaumaschine (304, 305, 306, 307) in einem besonderen Betriebskontext beschreibt;
basierend auf dem mindestens einen Zielort und der mindestens einen Betriebseigenschaft einen geschätzten Bedarf der mobilen Bergbaumaschine (304, 305, 306, 307) an mindestens einer fließenden Ressource an dem mindestens einen Zielort zu einem besonderen Zeitpunkt zu bestimmen; und
basierend auf dem geschätzten Bedarf Steuerinformationen zum Steuern einer Bereitstellung der mindestens einen fließenden Ressource bereitzustellen.

2. Einrichtung nach Anspruch 1, wobei die mindestens eine fließende Ressource mindestens eines der Folgenden umfasst: Luft, elektrische Leistung oder Wasser.

3. Einrichtung nach Anspruch 1 oder 2, wobei die Steuerinformationen einen oder mehrere Zeitparameter zum Steuern der Bereitstellung der mindestens einen fließenden Ressource umfassen.

4. Einrichtung nach einem vorstehenden Anspruch, wobei die Daten, die sich auf den Betrieb der mobilen Bergbaumaschine beziehen, weiter Daten umfassen, die sich auf die Bergbauumgebung beziehen.

5. Einrichtung nach einem vorstehenden Anspruch, wobei die mindestens eine Betriebseigenschaft Daten umfasst, die sich auf den Verbrauch der mindestens einen fließenden Ressource in dem besonderen Betriebskontext beziehen.

6. Einrichtung nach einem vorstehenden Anspruch, wobei der mindestens eine Speicher (160) und der Computerprogrammcode (120) konfiguriert sind, um mit dem mindestens einen Prozessor (110) die Einrichtung (100, 200) zu veranlassen, einen Bedarf der mobilen Bergbaumaschine (304, 305, 306, 307) an der mindestens einen fließenden Ressource am ersten Zielort zu einem ersten Zeitpunkt und an einem zweiten Zielort zu einem zweiten Zeitpunkt zu schätzen.

7. Einrichtung nach einem vorstehenden Anspruch, wobei das Schätzen eines Bedarfs der mobilen Bergbaumaschine (304, 305, 306, 307) an der mindestens einen fließenden Ressource das Bestimmen einer Verfügbarkeit der mindestens einen fließenden Ressource an dem mindestens einen Zielort zu dem besonderen Zeitpunkt umfasst.

8. Einrichtung nach einem vorstehenden Anspruch, wobei der mindestens eine Speicher und der Computerprogrammcode konfiguriert sind, um mit dem mindestens einen Prozessor die Einrichtung zu veranlassen, den geschätzten Bedarf als Reaktion auf eine Änderung der mindestens einen Betriebseigenschaft anzupassen.

9. Einrichtung nach einem vorstehenden Anspruch, wobei der geschätzte Bedarf einen Gesamtbedarf oder einen zusätzlichen Bedarf umfasst.

10. Einrichtung nach einem vorstehenden Anspruch, wobei der mindestens eine Speicher (160) und der Computerprogrammcode (120) konfiguriert sind, um mit dem mindestens einen Prozessor (110) die Einrichtung (100, 200) zu veranlassen, Steuerinformationen zum Steuern eines Verbrauchs der mindestens einen fließenden Ressource der Bergbaumaschine (304, 305, 306, 307) bereitzustellen.

11. Einrichtung nach einem vorstehenden Anspruch, wobei die Ressourcensteuerungseinrichtung eine Einrichtung zum Steuern einer Bereitstellung der mindestens einen Ressource für eine Flotte mobiler Bergbaumaschinen (304, 305, 306, 307) umfasst.

12. Einrichtung nach einem vorstehenden Anspruch, wobei die Einrichtung konfiguriert ist, um den geschätzten Bedarf als Heatmap zu präsentieren.

13. Einrichtung nach einem vorstehenden Anspruch, wobei die mobile Bergbaumaschine (304, 305, 306, 307) eine Gesteinsbohrmaschine, eine Fahrlader- (LHD)-Maschine, eine Bodenunterstützungsmaschine oder eine Transportmaschine umfasst.

14. Verfahren, umfassend:
Bestimmen (405) mindestens eines Zielorts einer mobilen Bergbaumaschine;
Empfangen (410) von Daten, die sich auf den Betrieb der mobilen Bergbaumaschine beziehen, wobei die Daten solche Daten umfassen, die sich auf die Leistung der mobilen Bergbaumaschine in einer Bergbauumgebung beziehen;
Bestimmen (415), basierend auf den Daten, die sich auf den Betrieb der mobilen Bergbaumaschine in der Bergbauumgebung beziehen, mindestens einer Betriebseigenschaft, die einen Parameterwert umfasst, der den Betrieb der mobilen Bergbaumaschine in einem besonderen Betriebskontext beschreibt;
Bestimmen (420), basierend auf dem mindestens einen Zielort und der mindestens einen Betriebseigenschaft, eines geschätzten Bedarfs der mobilen Bergbaumaschine an mindestens einer fließenden Ressource an dem mindestens einen Zielort zu einem besonderen Zeitpunkt; und
Bereitstellen (425), basierend auf dem geschätzten Bedarf, von Steuerinformationen zum Steuern der Bereitstellung der mindestens einen fließenden Ressource.

15. Computerprogramm, das Anweisungen umfasst, die, wenn das Programm auf dem Prozessor (110) der Ressourcensteuerungseinrichtung (200) nach Anspruch 1 ausgeführt wird, die Ressourcensteuerungseinrichtung (200) veranlassen, mindestens das Folgende durchzuführen:
Bestimmen mindestens eines Zielorts einer mobilen Bergbaumaschine (304, 305, 306, 307);
Empfangen von Daten, die sich auf den Betrieb der mobilen Bergbaumaschine (304, 305, 306, 307) beziehen, wobei die Daten solche Daten umfassen, die sich auf die Leistung der mobilen Bergbaumaschine in einer Bergbauumgebung beziehen;
Bestimmen, basierend auf den Daten, die sich auf den Betrieb der mobilen Bergbaumaschine (304, 305, 306, 307) in der Bergbauumgebung beziehen, mindestens einer Betriebseigenschaft, die einen Parameterwert umfasst, der den Betrieb der mobilen Bergbaumaschine (304, 305, 306, 307) in einem besonderen Betriebskontext beschreibt;
Bestimmen, basierend auf dem mindestens einen Zielort und der mindestens einen Betriebseigenschaft eines geschätzten Bedarfs der mobilen Bergbaumaschine (304, 305, 306, 307) an mindestens einer fließenden Ressource an dem mindestens einen Zielort zu einem besonderen Zeitpunkt; und
Bereitstellen, basierend auf dem geschätzten Bedarf, von Steuerinformationen zum Steuern der Bereitstellung der mindestens einen fließenden Ressource.

## Revendications

1. Appareil de commande de ressources (200) comprenant au moins un processeur (110) et au moins une mémoire (160) incluant un code de programme informatique (120), la au moins une mémoire (160) et le code de programme informatique (120) étant configurés pour, avec le au moins un processeur (110), amener l'appareil au moins à :
déterminer au moins un emplacement cible d'une machine d'exploitation minière mobile (304, 305, 306, 307) ;
recevoir des données relatives au fonctionnement de la machine d'exploitation minière mobile (304, 305, 306, 307), les données comprenant des données relatives aux performances de la machine d'exploitation minière mobile dans un environnement minier ;
déterminer, sur la base des données relatives au fonctionnement de la machine d'exploitation minière mobile (304, 305, 306, 307) dans l'environnement minier, au moins une caractéristique de fonctionnement comprenant une valeur de paramètre décrivant le fonctionnement de la machine d'exploitation minière mobile (304, 305, 306, 307) dans un contexte opérationnel donné ;
déterminer, sur la base du au moins un emplacement cible et de la au moins une caractéristique de fonctionnement, un besoin estimé de la machine d'exploitation minière mobile (304, 305, 306, 307) en au moins une ressource en circulation dans le au moins un emplacement cible à un instant donné ; et
fournir, en fonction du besoin estimé, des informations de commande pour commander la fourniture de la au moins une ressource en circulation.

2. Appareil selon la revendication 1, dans lequel la au moins une ressource en circulation comprend au moins l'un des éléments suivants : de l'air, de l'énergie électrique ou de l'eau.

3. Appareil selon la revendication 1 ou 2, dans lequel les informations de commande comprennent un ou plusieurs paramètres de synchronisation pour commander la fourniture de la au moins une ressource en circulation.

4. Appareil selon une quelconque revendication précédente, dans lequel les données relatives au fonctionnement de la machine d'exploitation minière mobile comprennent en outre des données relatives à l'environnement minier.

5. Appareil selon une quelconque revendication précédente, dans lequel la au moins une caractéristique de fonctionnement comprend des données relatives à la consommation de la au moins une ressource en circulation dans le contexte de fonctionnement donné.

6. Appareil selon une quelconque revendication précédente, dans lequel la au moins une mémoire (160) et le code de programme informatique (120) sont configurés pour, avec le au moins un processeur (110), amener l'appareil (100, 200) à estimer un besoin de la machine d'exploitation minière mobile (304, 305, 306, 307) en la au moins une ressource en circulation dans le premier emplacement cible à un premier instant et dans un second emplacement cible à un second instant.

7. Appareil selon une quelconque revendication précédente, dans lequel l'estimation d'un besoin de la machine d'exploitation minière mobile (304, 305, 306, 307) en la au moins une ressource en circulation comprend la détermination d'une disponibilité de la au moins une ressource en circulation dans le au moins un emplacement cible à l'instant donné.

8. Appareil selon une quelconque revendication précédente, dans lequel la au moins une mémoire et le code de programme informatique sont configurés pour, avec le au moins un processeur, amener l'appareil à ajuster le besoin estimé en réponse à un changement de la au moins une caractéristique de fonctionnement.

9. Appareil selon une quelconque revendication précédente, dans lequel le besoin estimé comprend un besoin total ou un besoin complémentaire.

10. Appareil selon une quelconque revendication précédente, dans lequel la au moins une mémoire (160) et le code de programme informatique (120) sont configurés pour, avec le au moins un processeur (110), amener l'appareil (100, 200) à fournir des informations de commande pour commander la consommation de la au moins une ressource en circulation de la machine d'exploitation minière (304, 305, 306, 307).

11. Appareil selon une quelconque revendication précédente, dans lequel l'appareil de commande de ressources comprend un appareil pour commander la fourniture de la au moins une ressource pour une flotte de machines d'exploitation minière mobiles (304, 305, 306, 307).

12. Appareil selon une quelconque revendication précédente, dans lequel l'appareil est configuré pour présenter le besoin estimé sous forme de carte de densité.

13. Appareil selon une quelconque revendication précédente, dans lequel la machine d'exploitation minière mobile (304, 305, 306, 307) comprend une perforatrice de roches, un chargeur souterrain (LHD), une machine de soutènement ou une machine de transport.

14. Procédé comprenant :
la détermination (405) d'au moins un emplacement cible d'une machine d'exploitation minière mobile ;
la réception (410) de données relatives au fonctionnement de la machine d'exploitation minière mobile, les données comprenant des données relatives aux performances de la machine d'exploitation minière mobile dans un environnement minier ;
la détermination (415), sur la base des données relatives au fonctionnement de la machine d'exploitation minière mobile dans l'environnement minier, d'au moins une caractéristique de fonctionnement comprenant une valeur de paramètre décrivant le fonctionnement de la machine d'exploitation minière mobile dans un contexte opérationnel donné ;
la détermination (420), sur la base du au moins un emplacement cible et de la au moins une caractéristique d'opération, d'un besoin estimé de la machine d'exploitation minière mobile en au moins une ressource en circulation dans le au moins un emplacement cible à un instant donné ; et
la fourniture (425), sur la base du besoin estimé, des informations de commande pour commander la fourniture de la au moins une ressource en circulation.

15. Programme informatique comprenant des instructions qui, lorsque le programme est exécuté sur le processeur (110) de l'appareil de commande de ressources (200) selon la revendication 1, amènent l'appareil de commande de ressources (200) à effectuer au moins ce qui suit :
la détermination d'au moins un emplacement cible d'une machine d'exploitation minière mobile (304, 305, 306, 307) ;
la réception de données relatives au fonctionnement de la machine d'exploitation minière mobile (304, 305, 306, 307), des données comprenant des données relatives aux performances de la machine d'exploitation minière mobile dans un environnement minier ;
la détermination, sur la base des données relatives au fonctionnement de la machine d'exploitation minière mobile (304, 305, 306, 307) dans l'environnement minier, d'au moins une caractéristique de fonctionnement comprenant une valeur de paramètre décrivant le fonctionnement de la machine d'exploitation minière mobile (304, 305, 306, 307) dans un contexte opérationnel donné ;
la détermination, sur la base du au moins un emplacement cible et de la au moins une caractéristique d'opération, d'un besoin estimé de la machine d'exploitation minière mobile (304, 305, 306, 307) en au moins une ressource en circulation dans le au moins un emplacement cible à un instant donné ; et
la fourniture, sur la base du besoin estimé, des informations de commande pour commander la fourniture de la au moins une ressource en circulation.
